# EUROPEAN PATENT APPLICATION

(11) **EP 3 640 870 A1**
(43) Date of publication of application: **22.04.2020**
(21) Application number: 19202316.6
(22) Date of filing: 09.10.2019
(51) Int. Cl.: G06Q 10/06, G06Q 10/00

(54) **ASSET PERFORMANCE MANAGER**

(30) Priority: 15.10.2018 US 201816160059
(71) Applicant: General Electric Company, Schenectady, NY 12345 (US)
(72) Inventor: CHAPIN, Ryan Matthew, Evendale, OH Ohio 45241 (US)
(74) Representative: Openshaw & Co.

(57) **Abstract**

Systems and techniques for managing asset performance are presented. A system can generate a set of digital twin models indicative of a set of virtual representations for a set of physical components associated with an asset. The system can also generate a set of digital twin scores for the set of digital twin models. Furthermore, the system can determine a digital twin score indicative of a condition state for the asset based on the set of digital twin scores and a fly-forward forecasting model associated with predicted operational characteristics for the asset.

## Description

### TECHNICAL FIELD

This disclosure relates generally to asset management systems, and more specifically, to an analytics system for one or more assets.

### BACKGROUND

Managing one or more assets can be burdensome with respect to cost, complexity, time, and/or accuracy. For instance, various industries often struggle with optimizing availability and use of used serviceable assets such as parts, subassemblies, assemblies, machines, systems and/or fleet of systems. Used serviceable assets are often beneficial in controlling overall life cycle cost of an asset. However, since an asset is generally operated uniquely with respect to other assets, it is generally difficult to capture unique, asset-specific variation for use in determining remaining usefulness for each used serviceable asset. Furthermore, conventional asset management systems generally do not adequately minimize overall life cycle costs of an asset. As such, conventional asset management systems can be improved.

### SUMMARY

The following presents a simplified summary of the specification in order to provide a basic understanding of some aspects of the specification. This summary is not an extensive overview of the specification. It is intended to neither identify key or critical elements of the specification, nor delineate any scope of the particular implementations of the specification or any scope of the claims. Its sole purpose is to present some concepts of the specification in a simplified form as a prelude to the more detailed description that is presented later.

According to an embodiment, a system includes a digital twin modeling component, a digital twin scoring component, and an asset scoring component. The digital twin modeling component generates a set of digital twin models indicative of a set of virtual representations for a set of physical components associated with an asset. The digital twin scoring component generates a set of digital twin scores for the set of digital twin models. The asset scoring component determines a digital twin score indicative of a condition state for the asset based on the set of digital twin scores and a fly-forward forecasting model associated with predicted operational characteristics for the asset. In certain embodiments, a user interface component provides a graphical user interface via a computing device to determine goal data for the asset. In certain embodiments, an inventory component determines inventory data for a set of available assets associated with the set of physical components based on the goal data and the digital twin score for the asset. In certain embodiments, the inventory component transmits the inventory data to a workscoping system that manages the set of available assets.

According to an embodiment, a method provides for generating, by a system comprising a processor, a set of digital twin models indicative of a set of virtual representations for a set of physical components associated with an asset. The method also provides for generating, by the system, a set of digital twin scores for the set of digital twin models. Furthermore, the method provides for determining, by the system, a digital twin score indicative of a condition state for the asset based on the set of digital twin scores and a fly-forward forecasting model associated with predicted operational characteristics for the asset.

According to another embodiment, a computer readable storage device comprises instructions that, in response to execution, cause a system comprising a processor to perform operations, comprising: generating a set of digital twin models indicative of a set of virtual representations for a set of physical components associated with an asset, generating a set of digital twin scores for the set of digital twin models, and determining a digital twin score indicative of a condition state for the asset based on the set of digital twin scores and a fly-forward forecasting model associated with predicted operational characteristics for the asset.

The following description and the annexed drawings set forth certain illustrative aspects of the specification. These aspects are indicative, however, of but a few of the various ways in which the principles of the specification may be employed. Other advantages and novel features of the specification will become apparent from the following detailed description of the specification when considered in conjunction with the drawings.

### BRIEF DESCRIPTION OF THE DRAWINGS

Numerous aspects, implementations, objects and advantages of the present invention will be apparent upon consideration of the following detailed description, taken in conjunction with the accompanying drawings, in which like reference characters refer to like parts throughout, and in which:
FIG. 1 illustrates a block diagram of an example, non-limiting system that includes an asset performance component in accordance with one or more embodiments described herein;
FIG. 2 illustrates a block diagram of another example, non-limiting system that includes an asset performance component in accordance with one or more embodiments described herein;
FIG. 3 illustrates a block diagram of yet another example, non-limiting system that includes an asset performance component in accordance with one or more embodiments described herein;
FIG. 4 illustrates an example, non-limiting system for managing asset performance in accordance with one or more embodiments described herein;
FIG. 5 illustrates another example, non-limiting system for managing asset performance in accordance with one or more embodiments described herein;
FIG. 6 illustrates an example, non-limiting system associated with generating digital twin models in accordance with one or more embodiments described herein;
FIG. 7 illustrates an example, non-limiting system associated with generating digital twin scores in accordance with one or more embodiments described herein;
FIG. 8 illustrates an example, non-limiting system associated with generating digital twin scoring data for an asset in accordance with one or more embodiments described herein;
FIG. 9 illustrates an example, non-limiting system associated with a user interface in accordance with one or more embodiments described herein;
FIG. 10 illustrates a flow diagram of an example, non-limiting method for managing asset performance in accordance with one or more embodiments described herein;
FIG. 11 is a schematic block diagram illustrating a suitable operating environment; and
FIG. 12 is a schematic block diagram of a sample-computing environment.

### DETAILED DESCRIPTION

Various aspects of this disclosure are now described with reference to the drawings, wherein like reference numerals are used to refer to like elements throughout. In the following description, for purposes of explanation, numerous specific details are set forth in order to provide a thorough understanding of one or more aspects. It should be understood, however, that certain aspects of this disclosure may be practiced without these specific details, or with other methods, components, materials, etc. In other instances, well-known structures and devices are shown in block diagram form to facilitate describing one or more aspects.

Systems and techniques for managing asset performance are presented. For instance, availability and/or use of used serviceable material for an asset can be optimized. In an aspect, unique digital twin models of subcomponents of an asset can be generated. The digital twin models can capture subcomponent-specific distress levels and/or life consumption based on a unique duty cycle that a particular subcomponent is exposed to during operation. Multiple digital twin models can be aggregated and employed for time inspection and/or maintenance of the asset that includes the subcomponent. In an embodiment, digital twin scores related to specific subcomponent identifiers (e.g., part numbers, serial numbers, etc.) can be stored in a database representing an overall availability of a variety of used assets. Additionally or alternatively, the digital twin scores can be linked to part identifiers to facilitate identification of parts that meet desired duty cycle of the asset. In certain embodiments, a user interface can be employed to identify available used serviceable assets that satisfy certain criteria for the asset. In an embodiment, a parametric fly-forward modeling technique can be employed to calculate a maximum acceptable digital twin score for each subcomponent of the asset to achieve an overall expected duty cycle of the asset. In another embodiment, a supply versus demand solver can identify a set of matches where acceptable inventory can support required demand. In certain embodiments, information associated with the supply versus demand solver can be transmitted to a workscoping tool for acceptance, ordering and/or consumption of acceptable parts. In certain embodiments, the user interface can summarize parts to be ordered to facilitate maximizing use of used serviceable assets. In certain embodiments, digital twins scores can be linked to configuration data to serve as remaining usefulness indicators of used serviceable components that are placed into inventory. Operational goals and/or maintenance goals can be utilized, along with a fly-forward forecasting model, to determine maximum acceptable digital twin scores (e.g., associated with each physical component within an asset) that can enable predetermined maintenance goals to be met. Maximum acceptable digital twin scores can also be employed along with an inventory system to find acceptable used serviceable materials that can be employed to successfully meet maintenance goals. As such, a health state of an individual part within an asset can be determined. For instance, life consumption of an asset can be more accurately estimated and/or a future life potential of an asset can be more accurately determined. Furthermore, performance of an asset can be improved.

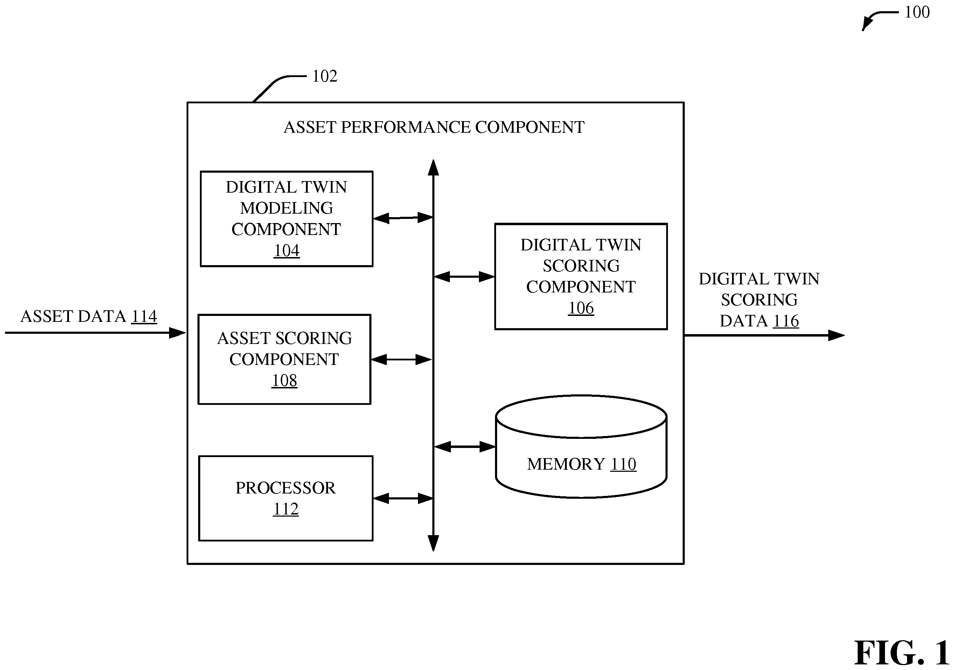

Referring initially to FIG. 1, there is illustrated an example system 100 that manages asset performance, in accordance with one or more embodiments described herein. The system 100 can be implemented on or in connection with a network of servers associated with an enterprise application. In one example, the system 100 can be associated with a cloud-based platform. The system 100 can be employed by various systems, such as, but not limited to asset systems, equipment systems, aviation systems, engine systems, aircraft systems, automobile systems, water craft systems, industrial equipment systems, industrial systems, manufacturing systems, factory systems, energy management systems, power grid systems, water supply systems, transportation systems, healthcare systems, refinery systems, media systems, financial systems, data-driven prognostics systems, diagnostics systems, digital systems, asset management systems, machine learning systems, neural network systems, network systems, computer network systems, communication systems, enterprise systems, and the like. In one example, the system 100 can be associated with a Platform-as-a-Service (PaaS) and/or an asset performance management system. In another example, the system 100 can be a digital prognostics system. Moreover, the system 100 and/or the components of the system 100 can be employed to use hardware and/or software to solve problems that are highly technical in nature (e.g., related to machine learning, related to digital data processing prognostics, related to digital data analytics, etc.), that are not abstract and that cannot be performed as a set of mental acts by a human.

The system 100 includes an asset performance component 102. In FIG. 1, the asset performance component 102 can include a digital twin modeling component 104, a digital twin scoring component 106, and/or an asset scoring component 108. Aspects of the systems, apparatuses or processes explained in this disclosure can constitute machine-executable component(s) embodied within machine(s), e.g., embodied in one or more computer readable mediums (or media) associated with one or more machines. Such component(s), when executed by the one or more machines, e.g., computer(s), computing device(s), virtual machine(s), etc. can cause the machine(s) to perform the operations described. The system 100 (e.g., the asset performance component 102) can include memory 110 for storing computer executable components and instructions. The system 100 (e.g., the asset performance component 102) can further include a processor 112 to facilitate operation of the instructions (e.g., computer executable components and instructions) by the system 100 (e.g., the asset performance component 102).

The asset performance component 102 (e.g., the digital twin modeling component 104) can receive asset data 114. The asset data 114 can be received from one or more databases (e.g., a network of databases). For example, the asset data 114 can be associated with data stored on a network of servers. The asset data 114 can also be a corpus of stored data generated by and/or associated with one or more assets. For example, the asset data 114 can be generated by and/or associated with one or more assets, one or more devices, one or more machines and/or one or more types of equipment. In an embodiment, the asset data 114 can be generated by and/or associated with a set of physical components of an asset. For example, the set of physical components can be one or more subcomponents of an asset. The asset data 114 can be, for example, time-series data. The asset data 114 can also be, for example, parametric data that includes one or more parameters and corresponding data values. The asset data 114 can include various data, such as but not limited to, sensor data, process data (e.g., process log data), operational data, monitoring data, maintenance data, parameter data, measurement data, performance data, industrial data, manufacturing data, machine data, asset data, equipment data, device data, meter data, real-time data, historical data, environmental data, audio data, image data, video data, and/or other data. The asset data 114 can also be encoded data, processed data and/or raw data. In a non-limiting example, the asset data 114 can be associated with data gathered from multiple physical components of an engine for an aircraft. However, it is to be appreciated that the asset data 114 can be associated with a different system such as, but not limited to a different asset system, a different equipment systems, a different aviation systems, a different aircraft systems, an automobile system, a water craft system, an industrial equipment system, an industrial system, a manufacturing system, a factory system, an energy management system, a power grid system, a water supply system, a transportation system, a healthcare system, a refinery system, a media system, a financial system, a data-driven prognostics system, a diagnostics system, a digital system, an asset management system, a machine learning system, a neural network system, a network system, a computer network system, a communication system, an enterprise system, etc.

The digital twin modeling component 104 can generate a set of digital twin models indicative of a set of virtual representations for a set of physical components associated with the asset data 114. For instance, the digital twin modeling component 104 can generate a set of digital twin models indicative of a set of virtual representations for a set of physical components of an asset that is associated with the asset data 114. In an example, the digital twin modeling component 104 can generate a first digital twin model for a first physical component of an asset associated with the asset data 114, a second digital twin model for a second physical component of the asset associated with the asset data 114, a third digital twin model for a third physical component of the asset associated with the asset data 114, etc. A digital twin model from the set of digital twin models can be a digital replica of a physical component of an asset associated with the asset data 114. Additionally or alternatively, a digital twin model from the set of digital twin models can be a digital replica of one or more failure modes (e.g., one or more unique failure modes) within a physical component of an asset associated with the asset data 114. In an aspect, a digital twin model from the set of digital twin models can be generated based on one or more artificial intelligence techniques, one or more machine learning techniques and/or one or more other data analytics techniques associated with the asset data 114. In an aspect, a digital twin model from the set of digital twin models can be a digital simulation of a physical component associated with the asset data 114 that provides an approximate real-time status and/or an approximate real-time condition for the physical component. In an embodiment, a digital twin model from the set of digital twin models can be a three-dimensional model that provides approximate real-time information regarding a physical component of an asset associated with the asset data 114. In another embodiment, a digital twin model from the set of digital twin models can provide approximate real-time information regarding information associated with fluid dynamics, thermal dynamics, combustion dynamics, aeromechanics, performance, operability and/or one or more other indicators of distress (e.g., part distress) for a physical component of an asset associated with the asset data 114. In an aspect, a digital twin model from the set of digital twin models can model progression of damage, progression of a degree of depreciation, progression of repair costs, progression of replacement costs and/or material demand for a physical component of an asset associated with the asset data 114. In an embodiment, the digital twin modeling component 104 can link a part number and/or a serial number for a physical component to a corresponding digital twin model from the set of digital twin models.

In certain embodiments, to facilitate generation of the digital twin models, the digital twin modeling component 104 can perform learning with respect to the asset data 114. The digital twin modeling component 104 can also generate inferences with respect to the asset data 114. The digital twin modeling component 104 can, for example, employ principles of artificial intelligence to facilitate learning and/or generating inferences with respect to the asset data 114. The digital twin modeling component 104 can perform learning with respect to the asset data 114 explicitly or implicitly. Additionally or alternatively, the digital twin modeling component 104 can also employ an automatic classification system and/or an automatic classification process to facilitate learning and/or generating inferences with respect to the asset data 114. For example, the digital twin modeling component 104 can employ a probabilistic and/or statistical-based analysis (e.g., factoring into the analysis utilities and costs) to learn and/or generate inferences with respect to the asset data 114. The digital twin modeling component 104 can employ, for example, a support vector machine (SVM) classifier to learn and/or generate inferences with respect to the asset data 114. Additionally or alternatively, the digital twin modeling component 104 can employ other classification techniques associated with Bayesian networks, decision trees and/or probabilistic classification models. Classifiers employed by the digital twin modeling component 104 can be explicitly trained (e.g., via a generic training data) as well as implicitly trained (e.g., via observing user behavior, receiving extrinsic information). For example, with respect to SVM's that are well understood, SVM's are configured via a learning or training phase within a classifier constructor and feature selection module. A classifier is a function that maps an input attribute vector, x = (x1, x2, x3, x4, xn), to a confidence that the input belongs to a class - that is, f(x) = confidence(class). The digital twin modeling component 104 can also employ, in certain implementations, historical data in addition to the stored data to facilitate learning and/or generating inferences for the asset data 114 and/or identifying similarity with one or more other assets (e.g., one or more other assets with a similar duty cycle, etc.).

In an aspect, the digital twin modeling component 104 can include an inference component that can further enhance automated aspects of the digital twin modeling component 104 utilizing in part inference based schemes to facilitate learning and/or generating inferences with respect to the asset data 114 and/or identifying similarity with one or more other assets (e.g., one or more other assets with a similar duty cycle, etc.). The digital twin modeling component 104 can employ any suitable machine-learning based techniques, statistical-based techniques and/or probabilistic-based techniques. For example, the digital twin modeling component 104 can employ expert systems, fuzzy logic, SVMs, Hidden Markov Models (HMMs), greedy search algorithms, rule-based systems, Bayesian models (e.g., Bayesian networks), neural networks, other non-linear training techniques, data fusion, utility-based analytical systems, systems employing Bayesian models, etc. In another aspect, the digital twin modeling component 104 can perform a set of machine learning computations associated with the asset data 114. For example, the digital twin modeling component 104 can perform a set of clustering machine learning computations, a set of decision tree machine learning computations, a set of instance-based machine learning computations, a set of regression machine learning computations, a set of regularization machine learning computations, a set of rule learning machine learning computations, a set of Bayesian machine learning computations, a set of deep Boltzmann machine computations, a set of deep belief network computations, a set of convolution neural network computations, a set of stacked auto-encoder computations and/or a set of different machine learning computations.

The digital twin scoring component 106 can generate a set of digital twin scores for the set of digital twin models. A digital twin score from the set of digital twin scores can be indicative of a condition state (e.g., a predicted condition state) of a physical component of an asset associated with the asset data 114 that is represented by a corresponding digital twin model. For example, a digital twin score from the set of digital twin scores can be indicative of a health state (e.g., a predicted health state) of a physical component of an asset associated with the asset data 114 that is represented by a corresponding digital twin model. In an aspect, a digital twin score from the set of digital twin scores can be indicative of a degree of distress (e.g., a predicted level of distress) for a physical component of an asset associated with the asset data 114 that is represented by a corresponding digital twin model. In an embodiment, a digital twin score from the set of digital twin scores can be a score from 0 to 10 that indicates a level of distress (e.g., a predicted level of distress) for a physical component of an asset associated with the asset data 114 that is represented by a corresponding digital twin model. For example, a lower digital twin score can represent a lower level of distress (e.g., a lower predicted level of distress) for a physical component and a higher digital twin score can represent a higher level of distress (e.g., a lower predicted level of distress) for a physical component. In an example, the digital twin scoring component 106 can generate a first digital twin score for a first physical component of an asset associated with the asset data 114 that is represented by a first digital twin model, a second digital twin score for a second physical component of the asset associated with the asset data 114 that is represented by a second digital twin model, a third digital twin score for a third physical component of the asset associated with the asset data 114 that is represented by a third digital twin model, etc.

The asset scoring component 108 can generate digital twin scoring data 116 for the asset associated with the asset data 114. The digital twin scoring data 116 can include, for example, a digital twin score for the asset associated with the asset data 114. The digital twin score for the asset can be, for example, a maximum acceptable digital twin score for the asset associated with the asset data 114 that enables goal data (e.g., a mission for the asset, a future maintenance objective for the asset, etc.) to be met through use of acceptable serviceable materials. For example, the digital twin score for the asset associated with the asset data 114 can be a maximum acceptable digital twin score for the asset that enables goal data to meet defined criteria associated with use of acceptable serviceable materials. The asset scoring component 108 can determine the digital twin scoring data 116 (e.g., the digital twin score for the asset associated with the asset data 114) based on the set of digital twin scores. Additionally or alternatively, the asset scoring component 108 can determine the digital twin scoring data 116 (e.g., the digital twin score for the asset associated with the asset data 114) based on a fly-forward forecasting model associated with predicted operational characteristics for the asset associated with the asset data 114. In an embodiment, the fly-forward forecasting model can determine how and/or where a given asset was operated historically, and can employ this information to predict one or more future operational conditions leading up to a next maintenance event for the given asset. In an aspect, the asset data 114 can be employed as an input back into one or more digital twin models to predict a digital twin score (e.g., a maximum acceptable digital twin score) for an asset which would enable the asset to meet a next duty cycle goal. For example, in a scenario where 1000 cycles are needed for an asset to reach a next maintenance event, a digital twin score (e.g., a maximum acceptable digital twin score) for an asset can be determined that can deliver at least 1000 cycles of additional operational time. Additionally or alternatively, the asset scoring component 108 can determine the digital twin scoring data 116 (e.g., the digital twin score for the asset associated with the asset data 114) based on configuration data for the set of physical components of the asset associated with the asset data 114. The digital twin score for the asset associated with the asset data 114 can be indicative of a condition state (e.g., a predicted condition state) for the asset associated with the asset data 114. For example, the digital twin score for the asset associated with the asset data 114 can be indicative of a health state (e.g., a predicted health state) for the asset associated with the asset data 114. In an aspect, the digital twin score for the asset associated with the asset data 114 can be indicative of a degree of distress (e.g., a predicted level of distress) for the asset associated with the asset data 114. In an embodiment, the digital twin score for the asset associated with the asset data 114 can be a score from 0 to 10 that indicates a level of distress (e.g., a predicted level of distress) for the asset associated with the asset data 114. For example, a lower digital twin score can represent a lower level of distress (e.g., a lower predicted level of distress) for the asset associated with the asset data 114 and a higher digital twin score can represent a higher level of distress (e.g., a higher predicted level of distress) for the asset associated with the asset data 114. In a non-limiting example, the digital twin score for the asset associated with the asset data 114 can model progression of damage to the asset associated with the asset data 114 (e.g., the digital twin score for the asset can determine how the asset has been operated, predict a number of remaining cycles before maintenance is needed, etc.). In an embodiment, the asset scoring component 108 can execute the fly-forward forecasting model based on a set of operational parameters (e.g., a set of historical parameters) for the asset associated with the asset data 114. For example, the fly-forward forecasting model can employ the set of operational parameters (e.g., the set of historical parameters) for the asset associated with the asset data 114 to forecast future operational characteristics for the asset associated with the asset data 114. Additionally or alternatively, the asset scoring component 108 can execute the fly-forward forecasting model based on environmental data for the asset associated with the asset data 114. For example, the fly-forward forecasting model can employ the environmental data for the asset associated with the asset data 114 to forecast future operational characteristics for the asset associated with the asset data 114. The environmental data can include, for example, information for a geographic location during operation of the asset associated with the asset data 114, temperature at a geographic location during operation of the asset associated with the asset data 114, humidity at a geographic location during operation of the asset associated with the asset data 114, salt content in air at a geographic location during operation of the asset associated with the asset data 114, weather conditions at a geographic location during operation of the asset associated with the asset data 114, an amount of air contaminates at a geographic location during operation of the asset associated with the asset data 114, an amount of suspended particulate in air at a geographic location during operation of the asset associated with the asset data 114, and/or other environmental information associated with operation of the asset associated with the asset data 114. In one example, the asset scoring component 108 can modify the digital twin score for the asset associated with the asset data 114 based on the environmental data. For example, the environmental data can be applied as a weight to the digital twin score for the asset associated with the asset data 114.

In certain embodiments, to facilitate generation of the digital twin scoring data 116, the asset scoring component 108 can perform learning associated with the fly-forward forecasting model. The asset scoring component 108 can also generate inferences associated with the fly-forward forecasting model. The asset scoring component 108 can, for example, employ principles of artificial intelligence to facilitate learning and/or generating inferences associated with the fly-forward forecasting model. The asset scoring component 108 can perform learning associated with the fly-forward forecasting model explicitly or implicitly. Additionally or alternatively, the asset scoring component 108 can also employ an automatic classification system and/or an automatic classification process to facilitate learning and/or generating inferences associated with the fly-forward forecasting model. For example, the asset scoring component 108 can employ a probabilistic and/or statistical-based analysis (e.g., factoring into the analysis utilities and costs) to learn and/or generate inferences associated with the fly-forward forecasting model. The asset scoring component 108 can employ, for example, a support vector machine (SVM) classifier to learn and/or generate inferences associated with the fly-forward forecasting model. Additionally or alternatively, the asset scoring component 108 can employ other classification techniques associated with Bayesian networks, decision trees and/or probabilistic classification models. Classifiers employed by the asset scoring component 108 can be explicitly trained (e.g., via a generic training data) as well as implicitly trained (e.g., via observing user behavior, receiving extrinsic information). For example, with respect to SVM's that are well understood, SVM's are configured via a learning or training phase within a classifier constructor and feature selection module. A classifier is a function that maps an input attribute vector, x = (x1, x2, x3, x4, xn), to a confidence that the input belongs to a class - that is, f(x) = confidence(class). The asset scoring component 108 can also employ, in certain implementations, historical data in addition to the stored data to facilitate learning and/or generating inferences associated with the fly-forward forecasting model.

In an aspect, the asset scoring component 108 can include an inference component that can further enhance automated aspects of the asset scoring component 108 utilizing in part inference-based schemes to facilitate learning and/or generating inferences associated with the fly-forward forecasting model. The asset scoring component 108 can employ any suitable machine-learning based techniques, statistical-based techniques and/or probabilistic-based techniques. For example, the asset scoring component 108 can employ expert systems, fuzzy logic, SVMs, Hidden Markov Models (HMMs), greedy search algorithms, rule-based systems, Bayesian models (e.g., Bayesian networks), neural networks, other non-linear training techniques, data fusion, utility-based analytical systems, systems employing Bayesian models, etc. In another aspect, the asset scoring component 108 can perform a set of machine learning computations associated with the fly-forward forecasting model. For example, the asset scoring component 108 can perform a set of clustering machine learning computations, a set of decision tree machine learning computations, a set of instance-based machine learning computations, a set of regression machine learning computations, a set of regularization machine learning computations, a set of rule learning machine learning computations, a set of Bayesian machine learning computations, a set of deep Boltzmann machine computations, a set of deep belief network computations, a set of convolution neural network computations, a set of stacked auto-encoder computations and/or a set of different machine learning computations.

While FIG. 1 depicts separate components in the asset performance component 102, it is to be appreciated that two or more components may be implemented in a common component. Further, it can be appreciated that the design of system 100 and/or the asset performance component 102 can include other component selections, component placements, *etc.,* to facilitate asset performance management.

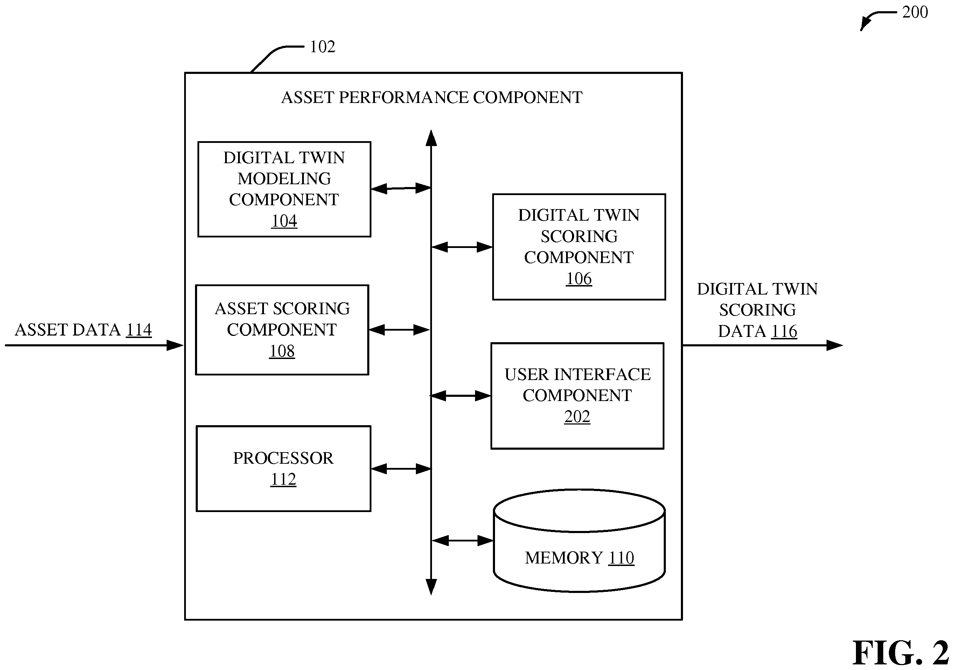

FIG. 2 illustrates a block diagram of an example, non-limiting system 200 in accordance with one or more embodiments described herein. Repetitive description of like elements employed in other embodiments described herein is omitted for sake of brevity.

The system 200 includes the asset performance component 102. In FIG. 2, the asset performance component 102 can include the digital twin modeling component 104, the digital twin scoring component 106, the asset scoring component 108, the memory 110, the processor 112, and/or a user interface component 202. The user interface component 202 can generate a graphical user interface for a computing device. The graphical user interface generated by the user interface component 202 can, for example, guide a user to identify available used material for a target asset. In an embodiment, the user interface component 202 can provide a graphical user interface via a computing device to, for example, determine goal data for the asset associated with the asset data 114. For instance, the digital twin scoring data 116 can be generated based in part on information presented by the user interface component 202. In one example, the user interface component 202 can employ data received via the graphical user interface to determine goal data for the asset associated with the asset data 114. In a non-limiting example, the user interface component 202 can present one or more parameters and/or one or more options to facilitate determination of goal data for the asset associated with the asset data 114. For instance, based on selection of one or more parameters and/or one or more options, the user interface component 202 can determine goal data for the asset associated with the asset data 114. In one example, the goal data can be a mission for the asset (e.g., perform 1800 cycles, etc.). In another embodiment, the user interface component 202 can provide a graphical user interface via a computing device to, for example, facilitate identification of one or more used assets for the asset associated with the asset data 114. For instance, the user interface component 202 can provide a graphical user interface via a computing device to, for example, facilitate identification of one or more used assets that satisfy a goal (e.g., a desired mission) for an asset. In one example, if 1800 cycles for an asset defines a goal, it can be determined what used parts are available that have enough remaining usefulness to deliver at least 1800 cycles of additional operation. The computing device can be, for example, a device with a display such as, but not limited to, a user device, a computer, a desktop computer, a laptop computer, a monitor device, a smart device, a smart phone, a mobile device, a handheld device, a tablet, a portable computing device or another type of computing device associated with a display. In an aspect, the user interface component 202 can generate a graphical user interface, for display, that outputs information associated with the asset data 114 and/or the digital twin scoring data 116 in a human interpretable format. The user interface component 202 can render a display to present and/or receive data from the computing device. In one example, the asset data 114 and/or the digital twin scoring data 116 can be presented digitally via a virtual representation. Furthermore, the asset data 114 and/or the digital twin scoring data 116 can be static or updated dynamically to provide information in real-time as changes or events occur.

While FIG. 2 depicts separate components in the asset performance component 102, it is to be appreciated that two or more components may be implemented in a common component. Further, it can be appreciated that the design of system 200 and/or the asset performance component 102 can include other component selections, component placements, *etc.,* to facilitate asset performance management.

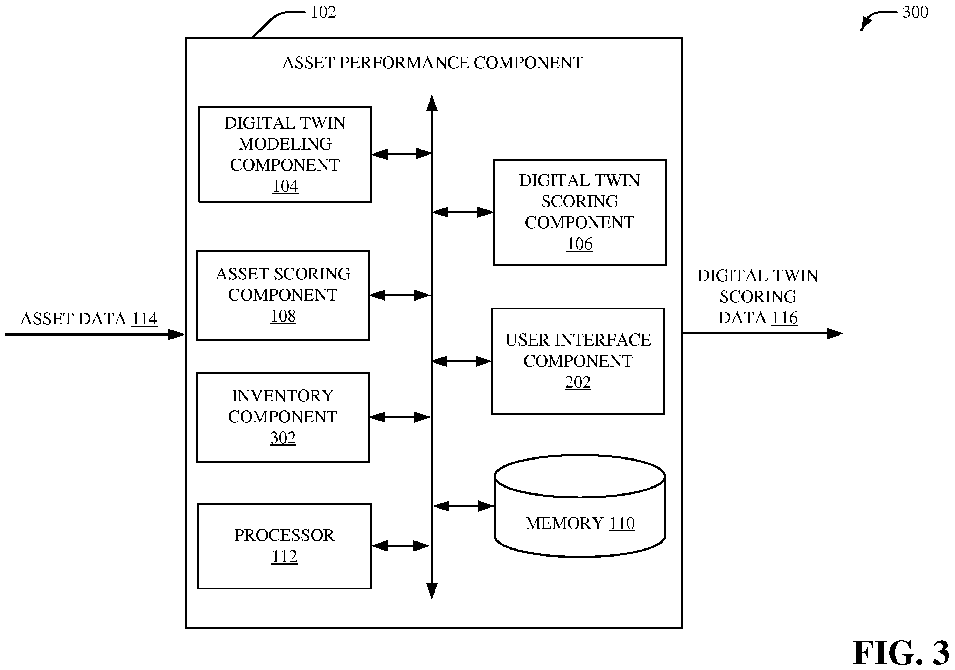

FIG. 3 illustrates a block diagram of an example, non-limiting system 300 in accordance with one or more embodiments described herein. Repetitive description of like elements employed in other embodiments described herein is omitted for sake of brevity.

The system 300 includes the asset performance component 102. In FIG. 3, the asset performance component 102 can include the digital twin modeling component 104, the digital twin scoring component 106, the asset scoring component 108, the memory 110, the processor 112, the user interface component 202, and/or an inventory component 302. The inventory component 302 can manage an inventory of a set of assets and/or a set of physical components for an asset. In an aspect, the inventory component 302 can be configured as a supply vs demand solver that identifies a match where inventory exists that meets criteria related to the digital twin score for the asset associated with the asset data 114. For instance, the inventory component 302 can determine availability of assets from a set of assets in inventory that meets criteria related to the digital twin score for the asset associated with the asset data 114. In an example, the inventory component 302 can determine availability of assets from a set of assets in inventory that meets a goal (e.g., a desired future mission) for the asset associated with the asset data 114. In an embodiment, the inventory component 302 can determine inventory data for a set of available assets associated with the set of physical components based on the goal data and the digital twin score for the asset associated with the asset data 114. In an aspect, the set of available assets can be an inventory of available assets that can replace the asset associated with the asset data 114 during, for example, a maintenance process for the asset associated with the asset data 114. In an embodiment, the inventory component 302 can be configured to match where inventory exists that meets a maximum acceptable digital twin score for an asset. In another embodiment, the inventory component 302 can be configured to send a signal to a workscoping tool (e.g., a workscoping system) for acceptance.

While FIG. 3 depicts separate components in the asset performance component 102, it is to be appreciated that two or more components may be implemented in a common component. Further, it can be appreciated that the design of system 300 and/or the asset performance component 102 can include other component selections, component placements, *etc.,* to facilitate asset performance management.

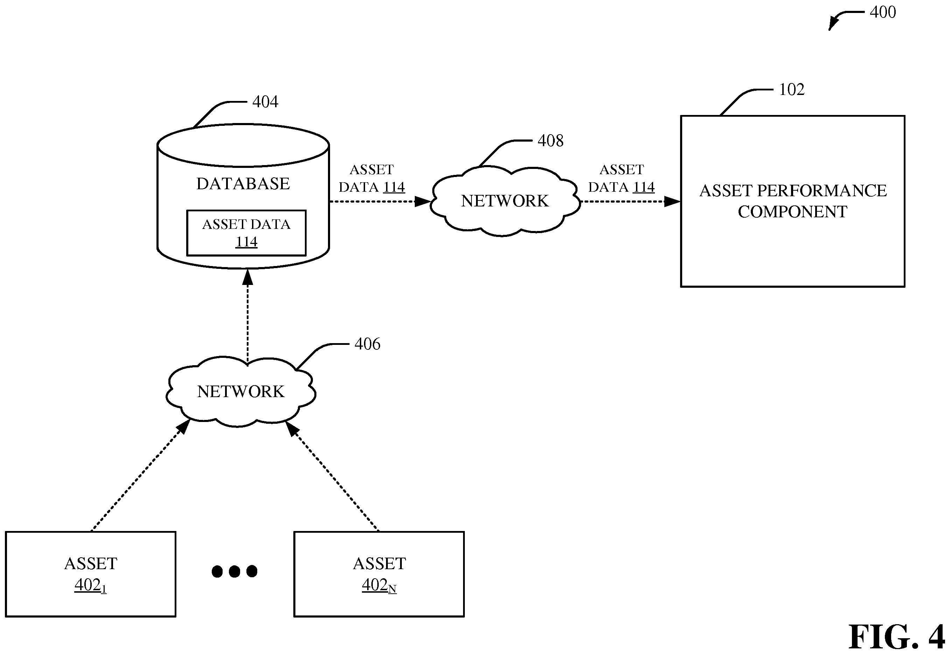

Referring now to FIG. 4, there is illustrated a non-limiting implementation of a system 400 in accordance with one or more embodiments described herein. Repetitive description of like elements employed in other embodiments described herein is omitted for sake of brevity.

The system 400 includes one or more assets 402_{1-N} and a database 404. The one or more assets 402_{1-N} and the database 404 can be in communication via a network 406. The network 406 can be a communication network, a wireless network, an internet protocol (IP) network, a voice over IP network, an internet telephony network, a mobile telecommunications network and/or another type of network. An asset from the one or more assets 402_{1-N} can be a device, a machine, a vehicle, equipment, an aircraft, an engine, a sensor device, a controller device (e.g., a programmable logic controller), a Supervisory Control And Data Acquisition (SCADA) device, a meter device, a monitoring device (e.g., a remote monitoring device), an edge device, a network-connected device, a remote terminal unit, a telemetry device, a user interface device (e.g., a human-machine interface device), a historian device, a computing device, and/or another type of asset. The one or more assets 402_{1-N} can also provide the asset data 114 to the database 404 via the network 406. Furthermore, the database 404 can store the asset data 114. Additionally or alternatively, in certain embodiments, the database 404 can store the digital twin scoring data 116 generated by the asset performance component 102. For example, in certain embodiments, the database 404 can additionally or alternatively store one or more fly-forward derived datasets, one or more digital twin model outputs (e.g., results of digital twin models), and/or other information associated with digital twin scoring. In an aspect, the database 404 and the asset performance component 102 can be in communication via a network 408. The network 408 can be a communication network, a wireless network, an IP network, a voice over IP network, an internet telephony network, a mobile telecommunications network and/or another type of network. In an embodiment, the asset performance component 102 can receive the asset data 114 from the database 404. For example, the asset performance component 102 can receive the asset data 114 via the network 408. In certain embodiments, the database 404 can enable maintaining a link between a digital twin model and a score associated with part identifiers (e.g., part number, serial number, etc.). For instance, the database 404 can link part identifiers (e.g., part number, serial number, customer data, age data for a part, etc.) with one or more digital twin models and/or digital twin model scores. Furthermore, at least a portion of the database 404 can be configured as a digital warehouse for available parts that meet future asset consumption requirements.

Compared to a conventional system, the asset performance component 102 can provide improved accuracy, reduced time, greater capabilities and/or greater adaptability for managing performance and/or maintenance for an asset associated with the asset data 114. Additionally, by employing the asset performance component 102, performance of the one or more assets 402_{1-N} can be improved, costs associated with the one or more assets 402_{1-N} can be reduced, and risks associated with the one or more assets 402_{1-N} can be minimized. Moreover, it is to be appreciated that technical features of the asset performance component 102 and management of performance and/or maintenance of the one or more assets 402_{1-N}, etc. are highly technical in nature and not abstract ideas. Processing threads of the asset performance component 102 that process the asset data 114 cannot be performed by a human (e.g., are greater than the capability of a single human mind). For example, the amount of the asset data 114 processed, the speed of processing of the asset data 114 and/or the data types of the asset data 114 analyzed by the asset performance component 102 over a certain period of time can be respectively greater, faster and different than the amount, speed and data type that can be processed by a single human mind over the same period of time. Furthermore, the asset data 114 analyzed by the asset performance component 102 can be raw data and/or compressed data associated with the one or more assets 402_{1-N}. Moreover, the asset performance component 102 can be fully operational towards performing one or more other functions (e.g., fully powered on, fully executed, etc.) while also analyzing the asset data 114.

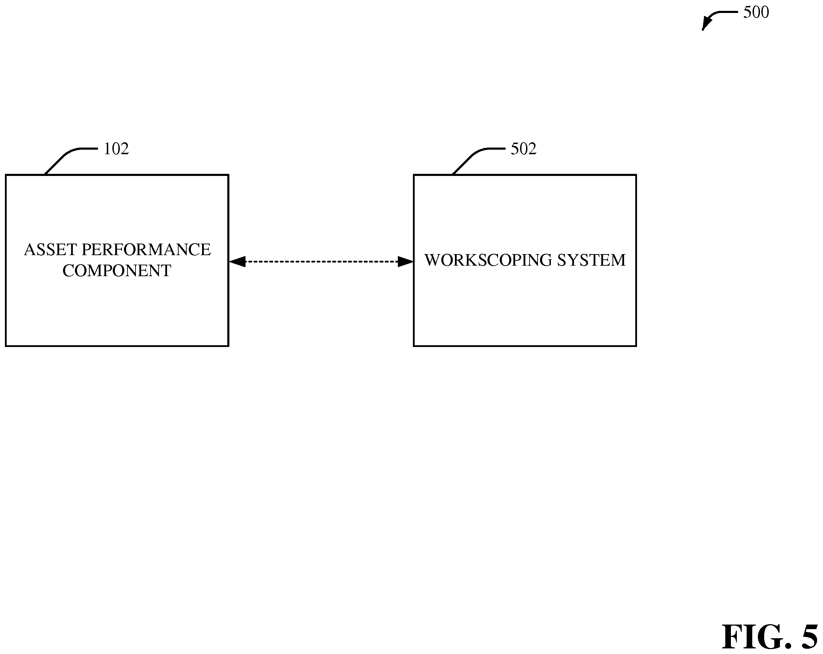

Referring now to FIG. 5, there is illustrated a non-limiting implementation of a system 500 in accordance with one or more embodiments described herein. Repetitive description of like elements employed in other embodiments described herein is omitted for sake of brevity.

The system 500 includes the asset performance component 102 and a workscoping system 502. The workscoping system 502 can provide a digital solution for increasing performance and/or productivity for one or more assets associated with the asset data 114. For example, the workscoping system 502 can provide health analytics for one or more assets associated with the asset data 114. In an embodiment, the asset performance component 102 can be in communication with the workscoping system 502. In another embodiment, the asset performance component 102 can be integrated in the workscoping system 502. In an aspect, the workscoping system 502 can manage a set of available assets that can replace an asset associated with the asset data 114. In another aspect, the workscoping system 502 can facilitate ordering and/or consumption of one or more assets in inventory based on the digital twin scoring data 116 generated by the asset performance component 102. In an embodiment, the inventory component 302 of the asset performance component 102 can transmit inventory data to a workscoping system 502 to facilitate ordering and/or consumption of one or more assets in inventory.

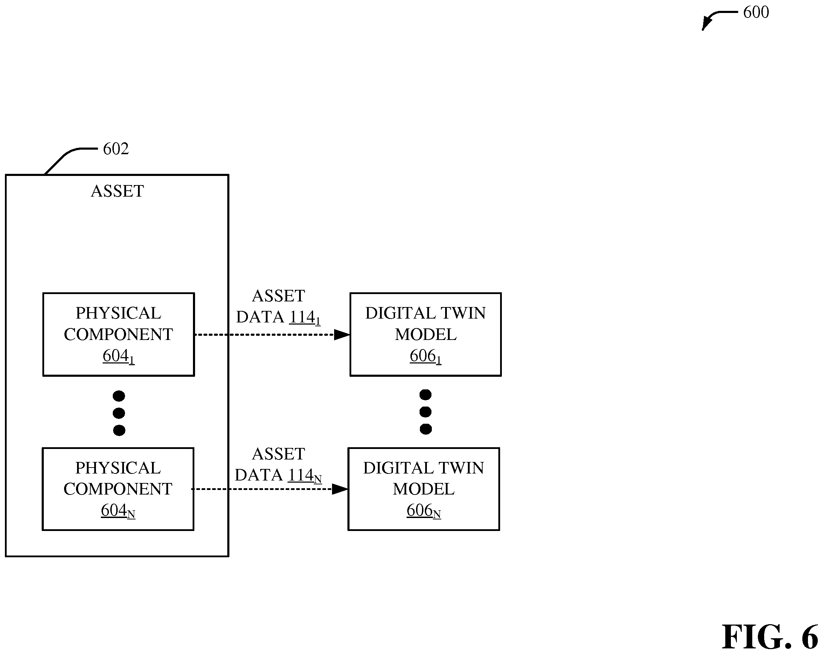

Referring now to FIG. 6, there is illustrated a non-limiting implementation of a system 600 in accordance with one or more embodiments described herein. Repetitive description of like elements employed in other embodiments described herein is omitted for sake of brevity.

The system 600 includes an asset 602. The asset 602 can be a machine associated with a maintenance cycle. For instance, the asset 602 can be a machine, a device, a vehicle, equipment, an aircraft, an engine, a sensor device, a controller device (e.g., a programmable logic controller), a SCADA device, a meter device, a monitoring device (e.g., a remote monitoring device), an edge device, a network-connected device, a remote terminal unit, a telemetry device, a user interface device (e.g., a human-machine interface device), a historian device, a computing device, and/or another type of asset. The asset 602 can include a set of physical components 604_{1-N}. The set of physical components 604_{1-N} can be one or more physical components of the asset 602. For example, the set of physical components 604_{1-N} can be one or more subcomponents of the asset 602. In a non-limiting example, the asset 602 can be an engine. Furthermore, the set of physical components 604_{1-N} can include a turbine blade of the asset 602, a compressor of the asset 602, a component of the asset 602 with high operating temperature, a high speed component of the asset 602, a high stress component of the asset 602, and/or another physical component of the asset 602. In an embodiment, the asset performance component 102 (e.g., the digital twin modeling component 104 of the asset performance component 102) can generate a set of digital twin models 606_{1-N} for the set of physical components 604_{1-N}. For instance, the asset performance component 102 (e.g., the digital twin modeling component 104 of the asset performance component 102) can generate a first digital twin model 606₁ for a first physical components 604₁ of the asset 602, the asset performance component 102 (e.g., the digital twin modeling component 104 of the asset performance component 102) can generate a second digital twin model 606₂ for a second physical components 604₂ of the asset 602, the asset performance component 102 (e.g., the digital twin modeling component 104 of the asset performance component 102) can generate an Nth digital twin model 606_{N} for an Nth physical components 604_{N} of the asset 602, etc., where N is an integer. In an embodiment, the asset performance component 102 (e.g., the digital twin modeling component 104 of the asset performance component 102) can generate the set of digital twin models 606_{1-N} based on the asset data 114 for the set of physical components 604_{1-N}. For instance, the asset performance component 102 (e.g., the digital twin modeling component 104 of the asset performance component 102) can generate the first digital twin model 606₁ based on first asset data 114₁ for the first physical components 604₁ of the asset 602, the asset performance component 102 (e.g., the digital twin modeling component 104 of the asset performance component 102) can generate the second digital twin model 606₂ based on second asset data 114₂ for the second physical components 604₂ of the asset 602, the asset performance component 102 (e.g., the digital twin modeling component 104 of the asset performance component 102) can generate the Nth digital twin model 606_{N} based on Nth asset data 114_{N} for the Nth physical components 604_{N} of the asset 602, etc. In certain embodiments, more than one digital twin model can be applied to a single physical component from the set of physical components 604_{1-N} to, for example, predict distress of a state of multiple potential failure modes on the single physical component. In an aspect, more than one digital twin models applied to the single physical component can be competed against each other to determine a most limiting failure mode, thereby determining an overall digital twin score of the single physical component. For instance, in a scenario where spallation, creep and rupture are three competing failure modes on the single physical component, and the digital twin scores are 3.2/10 for spallation, 7.8/10 for creep, and 5.5/10 for rupture, the aggregate most limiting digital twin score for the single physical component can be equal to 7.8/10.

The set of digital twin models 606_{1-N} can be a set of virtual representations for the set of physical components 604_{1-N} of the asset 602. For example, the first digital twin model 606₁ can be a first virtual representation for the first physical components 604₁ of the asset 602, the second digital twin model 606₂ can be a second virtual representation for the second physical components 604₂ of the asset 602, the Nth digital twin model 606_{N} can be an Nth virtual representation for the Nth physical components 604_{N} of the asset 602, etc. In an aspect, a digital twin model from the set of digital twin models 606_{1-N} can be a digital replica of corresponding physical component of the asset 602. In another aspect, the set of digital twin models 606_{1-N} can be generated (e.g., by the digital twin modeling component 104 of the asset performance component 102) based on one or more artificial intelligence techniques, one or more machine learning techniques and/or one or more other data analytics techniques associated with the asset data 114_{1-N}. In an aspect, the set of digital twin models 606_{1-N} can be digital simulations corresponding physical component of the asset 602 that provides an approximate real-time status and/or an approximate real-time condition for the physical components 604_{1-N}. In an embodiment, the set of digital twin models 606_{1-N} can be three-dimensional models that provide approximate real-time information regarding a corresponding physical component of the asset 602. For example, the set of digital twin models 606_{1-N} can be three-dimensional models that provide approximate real-time information regarding a health state of a corresponding physical component of the asset 602. In another embodiment, the set of digital twin models 606_{1-N} can provide approximate real-time information regarding information associated with fluid dynamics, thermal dynamics, combustion dynamics, aeromechanics, performance, operability and/or one or more other indicators of distress (e.g., part distress) for a corresponding physical component of the asset 602. In another aspect, the set of digital twin models 606_{1-N} can model progression of damage, progression of a degree of depreciation, progression of repair costs, progression of replacement costs and/or material demand for corresponding physical components 604_{1-N} of the asset 602.

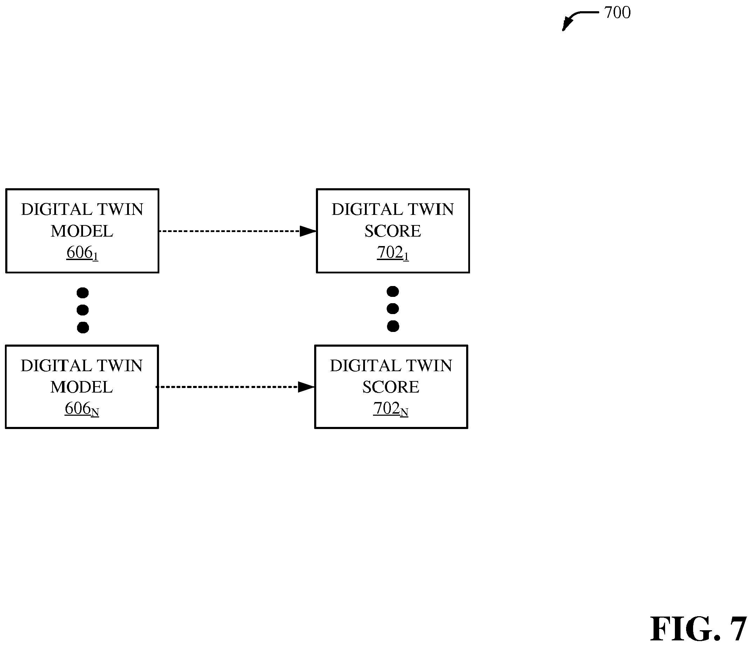

Referring now to FIG. 7, there is illustrated a non-limiting implementation of a system 700 in accordance with one or more embodiments described herein. Repetitive description of like elements employed in other embodiments described herein is omitted for sake of brevity.

The system 700 includes the set of digital twin models 606_{1-N} and a set of digital twin scores 702_{1-N}. The set of digital twin scores 702_{1-N} can be generated (e.g., by the digital twin scoring component 106 of the asset performance component 102) for the set of digital twin models 606_{1-N}. For instance, the digital twin scoring component 106 of the asset performance component 102 can generate a first digital twin score 702₁ for the first digital twin model 606₁, the digital twin scoring component 106 of the asset performance component 102 can generate a second digital twin score 702₂ for the second digital twin model 606₂, the digital twin scoring component 106 of the asset performance component 102 can generate an Nth digital twin score 702_{N} for the Nth digital twin model 606_{N}, etc. The set of digital twin scores 702_{1-N} can be indicative of condition states (e.g., predicted condition states) for corresponding physical components of the asset 602 that is represented by a corresponding digital twin model 606_{1-N}. For example, the set of digital twin scores 702_{1-N} can be indicative of health states (e.g., predicted health states) for corresponding physical components of the asset 602 that is represented by a corresponding digital twin model 606_{1-N}. Additionally or alternatively, the set of digital twin scores 702_{1-N} can be indicative of distress levels of individual failure modes on a single physical component from the set of physical components 604_{1-N}. In an aspect, the set of digital twin scores 702_{1-N} can be indicative of a degree of distress (e.g., a predicted level of distress) for corresponding physical components of the asset 602 that is represented by a corresponding digital twin model 606_{1-N}. In an embodiment, a digital twin score from the set of digital twin scores 702_{1-N} can be a score from 0 to 10 that indicates a level of distress (e.g., a predicted level of distress) for a corresponding physical component of the asset 602 that is represented by a corresponding digital twin model 606_{1-N}. For example, a lower digital twin score can represent a lower level of distress (e.g., a lower predicted level of distress) for a physical component and a higher digital twin score can represent a higher level of distress (e.g., a higher predicted level of distress) for a physical component. In an example, the digital twin scoring component 106 can generate the first digital twin score 702₁ for the first physical component 604₁ of the asset 602 that is represented by the first digital twin model 606₁, the digital twin scoring component 106 can generate the second digital twin score 702₂ for the second physical component 604₂ of the asset 602 that is represented by the second digital twin model 606₂, the digital twin scoring component 106 can generate the Nth digital twin score 702_{N} for the Nth physical component 604_{N} of the asset 602 that is represented by the Nth digital twin model 606_{N}, etc. In certain embodiments, the digital twin scoring component 106 can generate a Pth failure mode on an Nth physical component, where P is an integer.

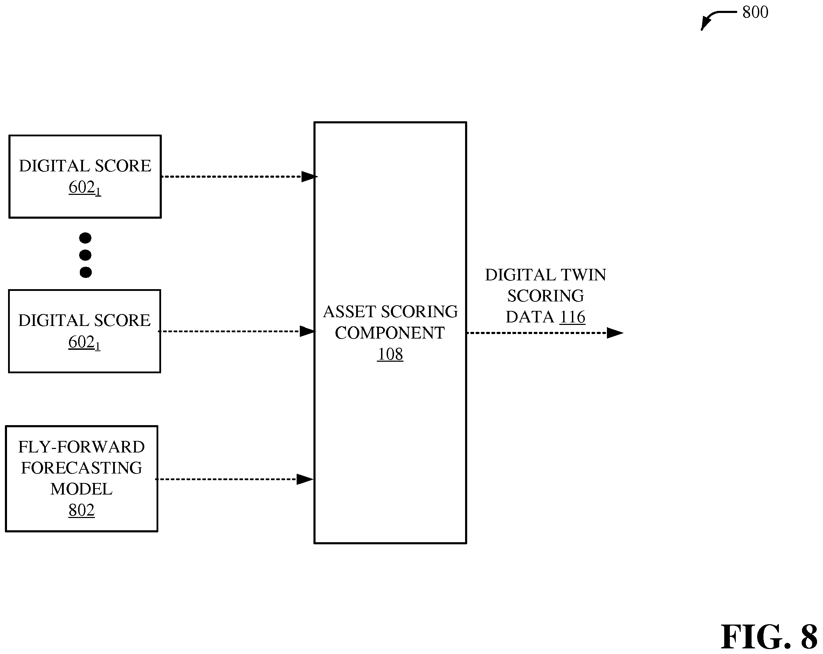

Referring now to FIG. 8, there is illustrated a non-limiting implementation of a system 800 in accordance with one or more embodiments described herein. Repetitive description of like elements employed in other embodiments described herein is omitted for sake of brevity.

The system 800 includes the asset scoring component 108. The asset scoring component 108 can receive the set of digital twin scores 702_{1-N} and a fly-forward forecasting model 802. Based on the set of digital twin scores 702_{1-N} and/or the fly-forward forecasting model 802, the asset scoring component 108 can generate the digital twin scoring data 116. The fly-forward forecasting model 802 can be associated with predicted operational characteristics for the asset 602 and/or the set of physical components 604_{1-N}. For example, the fly-forward forecasting model 802 can employ a set of operational parameters (e.g., a set of historical parameters) for the asset 602 to forecast future operational characteristics for the asset 602. Additionally or alternatively, the fly-forward forecasting model 802 can be generated based on environmental data associated with environmental exposure for the asset 602. For example, the fly-forward forecasting model can employ the environmental data for the asset 602 to forecast future operational characteristics for the asset 602. The environmental data can include, for example, information for a geographic location during operation of the asset 602, temperature at a geographic location during operation of the asset 602, humidity at a geographic location during operation of the asset 602, salt content in air at a geographic location during operation of the asset 602, weather conditions at a geographic location during operation of the asset 602, an amount of air contaminates at a geographic location during operation of the asset 602, an amount of suspended particulate in air at a geographic location during operation of the asset 602, and/or other environmental information associated with operation of the asset 602. The digital twin scoring data 116 can include, for example, a digital twin score for the asset 602. The digital twin score for the asset 602 can be indicative of a condition state (e.g., a predicted condition state) for the asset 602. For instance, the digital twin score for the asset 602 can be indicative of a health state (e.g., a predicted health state) for the asset 602. In an example, one or more digital twin scores for one or more physical components and/or one or more failure modes can be aggregated at an overall asset level (e.g., a machine asset consisting of multiple sub-assets or physical components, etc.).

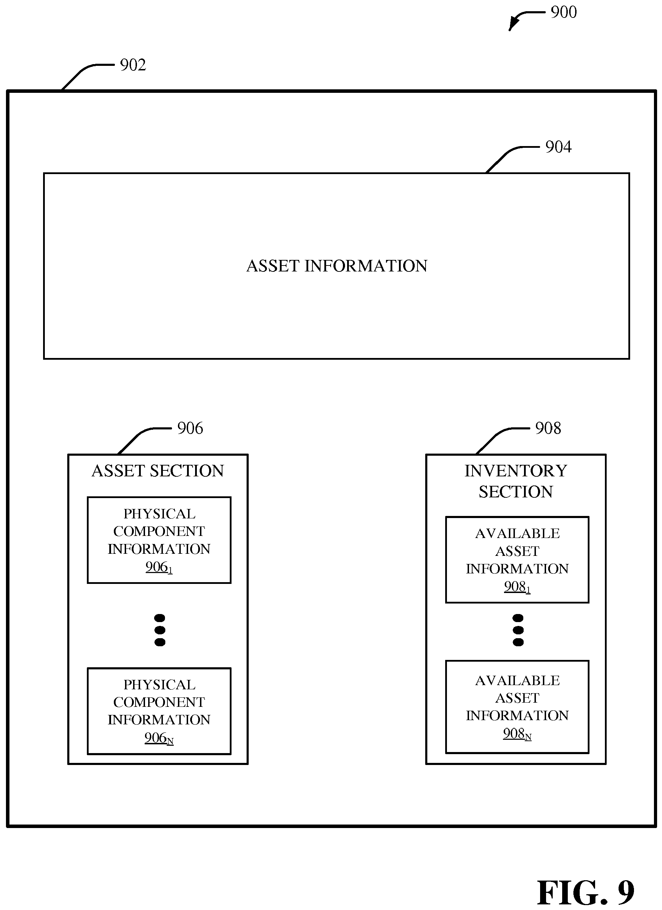

Referring now to FIG. 9, there is illustrated a non-limiting implementation of a system 900 in accordance with one or more embodiments described herein. Repetitive description of like elements employed in other embodiments described herein is omitted for sake of brevity.

In an embodiment, the system 900 can be associated with the user interface component 202, the inventory component 302 and/or the workscoping system 502. The system 900 illustrates an example user interface 902. The user interface 902 can be a graphical user interface that presents (e.g., displays) graphical elements. In one example, the user interface 902 can be associated with an enterprise application. The user interface 902 can be presented on a display of a display device such as, but not limited to, a computing device, a smart device, a smart phone, a mobile device, a handheld device, a tablet, a computer, a desktop computer, a laptop computer, a monitor device, a portable computing device or another type of display device. In an aspect, the user interface 902 can present asset information 904. The asset information 904 can be associated with information employed by and/or generated by the asset performance component 102. For example, the asset information 904 can present information related to one or more assets and/or one or more physical components of an asset. The asset information 904 can be presented in a human interpretable format. For example, the asset information 904 can be presented as a graphical element such as, but not limited to, a notification, a message, an icon, a thumbnail, a dialog box, an interactive tool, a widget, a graph, a model or another type of graphical element. In an embodiment, the asset information 904 can include a description of an asset. Additionally or alternatively, the asset information 904 can include goal data (e.g., a mission) for an asset. Additionally or alternatively, the asset information 904 can include a geographic location for an asset. Additionally or alternatively, the asset information 904 can provide a model (e.g., a three-dimensional model) for an asset. Additionally or alternatively, the asset information 904 can include customer information and/or contract specific information (e.g., maintenance agreement terms and conditions, spare asset status, etc.) for an asset. Additionally or alternatively, the asset information 904 can include an ability to review historic maintenance records of an asset to help a workscoping professional to determine an optimal workscope and/or use of used serviceable materials where advantageous to meeting customer commitments relative to goal data (e.g., a mission) for an asset. Additionally or alternatively, the asset information 904 can include configuration data associated with one or more part numbers, one or more serial numbers and/or other information for individual physical components within an asset. In another aspect, the user interface 902 can present an asset section 906. The asset section 906 can include information for one or more physical components of an asset associated with the asset information 904. For instance, the asset section 906 can include physical component information 906_{1-N} related to one or more physical components. The asset section 906 can be presented in a human interpretable format. For example, the asset section 906 can be presented as a graphical element such as, but not limited to, a notification, a message, an icon, a thumbnail, a dialog box, an interactive tool, a widget, a graph, a model or another type of graphical element. In an embodiment, the asset section 906 can include a list of physical components for an asset associated with the asset information 904. Additionally or alternatively, the asset section 906 can include a demand for a list of physical components for an asset associated with the asset information 904. Additionally or alternatively, the asset section 906 can include one or more digital twin scores for one or more physical components of an asset associated with the asset information 904 and/or one or more failure modes on an individual physical component.

In yet another aspect, the user interface 902 can present an inventory section 908. The inventory section 908 can include information regarding an inventory of available assets that can replace an asset associated with the asset information 904 during a maintenance process. For instance, the inventory section 908 can include available asset information 908_{1-N}. The inventory section 908 can be presented in a human interpretable format. For example, the inventory section 908 can be presented as a graphical element such as, but not limited to, a notification, a message, an icon, a thumbnail, a dialog box, an interactive tool, a widget, a graph, a model or another type of graphical element. In an embodiment, the inventory section 908 can include a list of available assets that can replace an asset associated with the asset information 904. Additionally or alternatively, the inventory section 908 can include availability information for available assets that can replace an asset associated with the asset information 904. Additionally or alternatively, the inventory section 908 can include information regarding a percentage and/or count of available assets that meet a criteria associated with a digital twin score for an asset associated with the asset information 904. The user interface 902 can also facilitate analytics, asset performance management and/or optimization of maintenance for an asset. It is to be appreciated that the user interface 902 is merely an example. Therefore, the location and/or content of the asset information 904, the asset section 906 and/or the inventory section 908 can be varied. Furthermore, the user interface 902 can include other features, content and/or functionalities not shown in FIG. 9.

The aforementioned systems and/or devices have been described with respect to interaction between several components. It should be appreciated that such systems and components can include those components or sub-components specified therein, some of the specified components or sub-components, and/or additional components. Sub-components could also be implemented as components communicatively coupled to other components rather than included within parent components. Further yet, one or more components and/or sub-components may be combined into a single component providing aggregate functionality. The components may also interact with one or more other components not specifically described herein for the sake of brevity, but known by those of skill in the art.

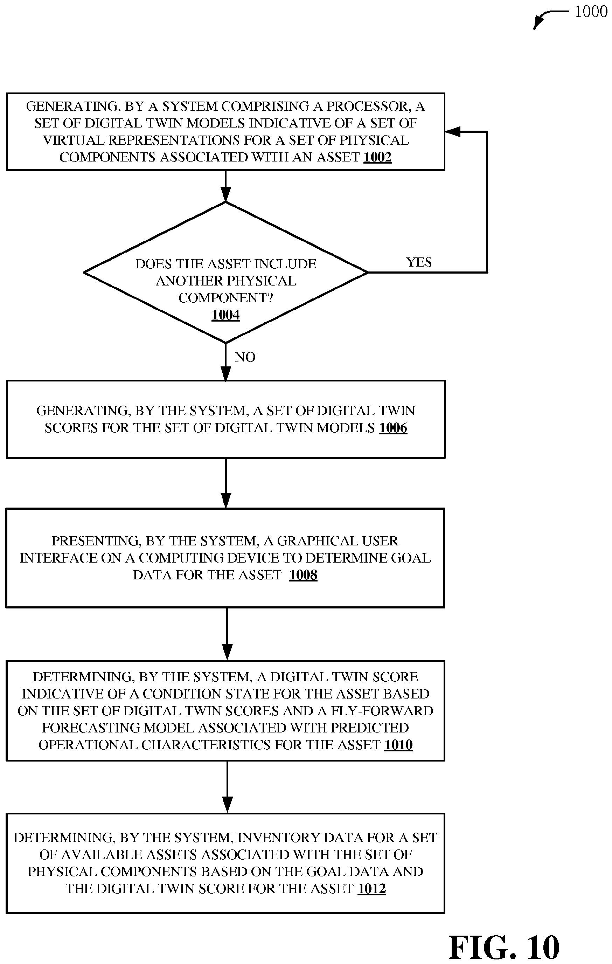

Figure 10 illustrates a methodology and/or a flow diagram in accordance with the disclosed subject matter. For simplicity of explanation, the methodology is depicted and described as a series of acts. It is to be understood and appreciated that the subject innovation is not limited by the acts illustrated and/or by the order of acts, for example acts can occur in various orders and/or concurrently, and with other acts not presented and described herein. Furthermore, not all illustrated acts may be required to implement the methodology in accordance with the disclosed subject matter. In addition, those skilled in the art will understand and appreciate that the methodology could alternatively be represented as a series of interrelated states *via* a state diagram or events. Additionally, it should be further appreciated that the methodology disclosed hereinafter and throughout this specification are capable of being stored on an article of manufacture to facilitate transporting and transferring such methodologies to computers. The term article of manufacture, as used herein, is intended to encompass a computer program accessible from any computer-readable device or storage media.

Referring to FIG. 10, there illustrated is a methodology 1000 for managing asset performance, according to one or more embodiments of the subject innovation. As an example, the methodology 1000 can be utilized in various applications, such as, but not limited to, asset systems, equipment systems, aviation systems, engine systems, aircraft systems, automobile systems, water craft systems, industrial equipment systems, industrial systems, manufacturing systems, factory systems, energy management systems, power grid systems, water supply systems, transportation systems, healthcare systems, refinery systems, media systems, financial systems, data-driven prognostics systems, diagnostics systems, digital systems, asset management systems, machine learning systems, neural network systems, network systems, computer network systems, communication systems, enterprise systems, etc. At 1002, a set of digital twin models indicative of a set of virtual representations for a set of physical components associated with an asset is generated by a system comprising a processor (e.g., by digital twin modeling component 104). A digital twin model from the set of digital twin models can be a digital replica of a physical component of the asset. For example, a digital twin model from the set of digital twin models can be generated based on one or more artificial intelligence techniques, one or more machine learning techniques and/or one or more other data analytics techniques associated with asset data for the asset. In an aspect, a digital twin model from the set of digital twin models can be a digital simulation of a physical component associated with the asset that provides an approximate real-time status and/or an approximate real-time condition for the physical component. In an embodiment, a digital twin model from the set of digital twin models can be a three-dimensional model that provides approximate real-time information regarding a physical component of the asset. In another embodiment, a digital twin model from the set of digital twin models can provide approximate real-time information regarding information associated with fluid dynamics, thermal dynamics, combustion dynamics, aeromechanics, performance, operability and/or one or more other indicators of distress (e.g., part distress) for a physical component of the asset. In an aspect, a digital twin model from the set of digital twin models can model progression of damage, progression of a degree of depreciation, progression of repair costs, progression of replacement costs and/or material demand for a physical component of the asset.

At 1004, it is determined whether the asset includes another physical component. If yes, the methodology 1000 returns to 1002. If no, the methodology 1000 proceeds to 1006.

At 1006, a set of digital twin scores for the set of digital twin models is generated by the system (e.g., by digital twin scoring component 106). A digital twin score from the set of digital twin scores can be indicative of a condition state (e.g., a predicted condition state) of a physical component of the asset that is represented by a corresponding digital twin model. For example, a digital twin score from the set of digital twin scores can be indicative of a health state (e.g., a predicted health state) of a physical component of the asset that is represented by a corresponding digital twin model. In an aspect, a digital twin score from the set of digital twin scores can be indicative of a degree of distress (e.g., a predicted level of distress) for a physical component of the asset that is represented by a corresponding digital twin model. Additionally or alternatively, a digital twin score from the set of digital twin scores can be indicative of a degree of distress (e.g., a predicted level of distress) for one or more failure modes within a physical component. In an embodiment, a digital twin score from the set of digital twin scores can be a score from 0 to 10 that indicates a level of distress (e.g., a predicted level of distress) for a physical component of the asset that is represented by a corresponding digital twin model. For example, a lower digital twin score can represent a lower level of distress (e.g., a lower predicted level of distress) for a physical component and a higher digital twin score can represent a higher level of distress (e.g., a higher predicted level of distress) for a physical component.

At 1008, a graphical user interface is presented, by the system (e.g., by user interface component 202), on a computing device to determine goal data for the asset. For instance, the graphical user interface can present one or more parameters and/or one or more options to facilitate determination of goal data for the asset. In one example, based on selection of one or more parameters and/or one or more options via the graphical user interface, goal data for the asset can be determined. In one example, the goal data can be a mission for the asset (e.g., perform 1800 cycles, etc.). In an embodiment, the goal data can be entered into the graphical user interface for use in identifying available used serviceable assets that meet a goal of a maintenance event. In an aspect, the graphical user interface can be presented via a computing device to, for example, facilitate identification of one or more used assets for the asset. The computing device can be, for example, a device with a display such as, but not limited to, a user device, a computer, a desktop computer, a laptop computer, a monitor device, a smart device, a smart phone, a mobile device, a handheld device, a tablet, a portable computing device or another type of computing device associated with a display.

At 1010, a digital twin score indicative of a condition state for the asset is determined, by the system (e.g., by asset scoring component 108), based on the set of digital twin scores and a fly-forward forecasting model associated with predicted operational characteristics for the asset. The digital twin score for the asset can be indicative of a condition state (e.g., a predicted condition state) for the asset. For example, the digital twin score for the asset can be indicative of a health state (e.g., a predicted health state) for the asset associated with the asset. In an aspect, the digital twin score for the asset can be indicative of a degree of distress (e.g., a predicted level of distress) for the asset. In an embodiment, the digital twin score for the asset can be a score from 0 to 10 that indicates a level of distress (e.g., a predicted level of distress) for the asset. For example, a lower digital twin score can represent a lower level of distress (e.g., a lower predicted level of distress) for the asset and a higher digital twin score can represent a higher level of distress (e.g., a higher predicted level of distress) for the asset. In one example, the digital twin score for the asset can be a maximum acceptable digital twin score for the asset.

At 1012, inventory data for a set of available assets associated with the set of physical components is determined, by the system (e.g., by inventory component 302), based on the goal data and the digital twin score for the asset. For instance, availability of assets from a set of assets in inventory that meets criteria related to the digital twin score and/or the goal data for the asset can be determined. The set of available assets can be an inventory of available assets that can replace the asset during, for example, a maintenance process for the asset.

In certain embodiments, the methodology 1000 can further include obtaining, by the system, configuration data (e.g., part numbers, serial numbers, hours/cycles of operation, etc.) for the set of physical components associated with the asset. Additionally or alternatively, the methodology 1000 can further include determining the digital twin score for the asset based on the set of digital twin scores, the fly-forward forecasting model, and the configuration data. In certain embodiments, the methodology 1000 can additionally or alternatively include executing, by the system, the fly-forward forecasting model based on a set of operational parameters and environmental data associated with the asset. In certain embodiments, the methodology 1000 can additionally or alternatively include transmitting, by the system, the inventory data to a workscoping system that manages the set of available assets.

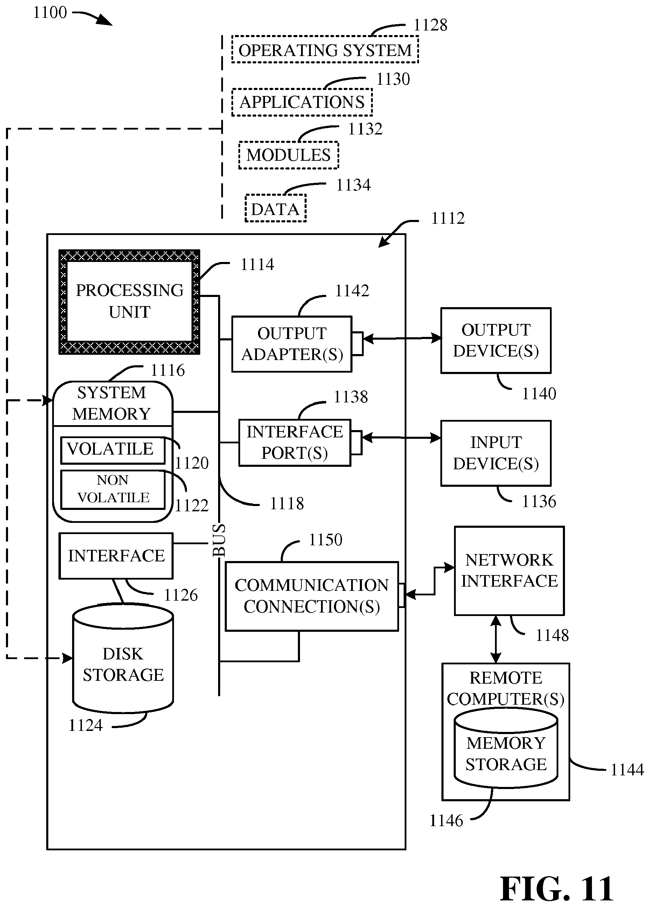

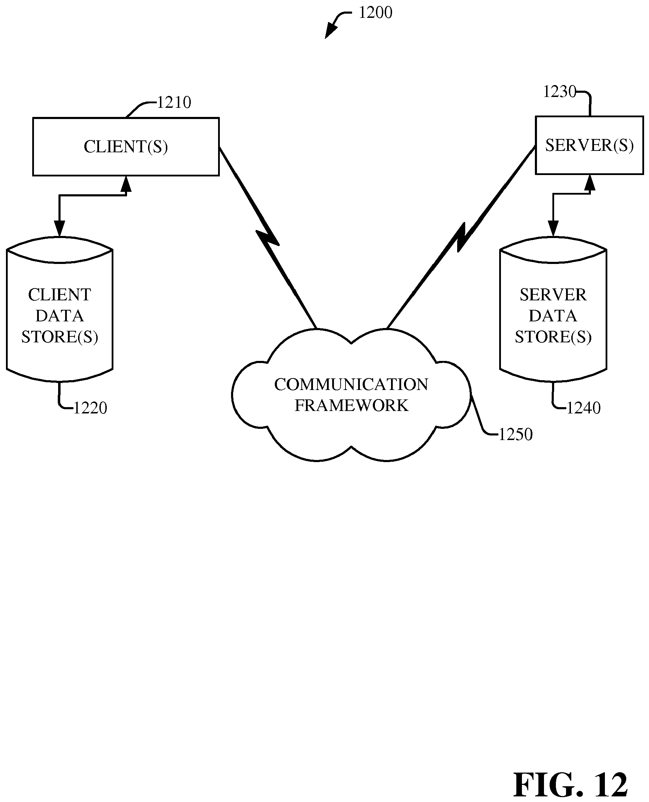

In order to provide a context for the various aspects of the disclosed subject matter, FIGS. 11 and 12 as well as the following discussion are intended to provide a brief, general description of a suitable environment in which the various aspects of the disclosed subject matter may be implemented.

With reference to FIG. 11, a suitable environment 1100 for implementing various aspects of this disclosure includes a computer 1112. The computer 1112 includes a processing unit 1114, a system memory 1116, and a system bus 1118. The system bus 1118 couples system components including, but not limited to, the system memory 1116 to the processing unit 1114. The processing unit 1114 can be any of various available processors. Dual microprocessors and other multiprocessor architectures also can be employed as the processing unit 1114.

The system bus 1118 can be any of several types of bus structure(s) including the memory bus or memory controller, a peripheral bus or external bus, and/or a local bus using any variety of available bus architectures including, but not limited to, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Card Bus, Universal Serial Bus (USB), Advanced Graphics Port (AGP), Personal Computer Memory Card International Association bus (PCMCIA), Firewire (IEEE 1394), and Small Computer Systems Interface (SCSI).

The system memory 1116 includes volatile memory 1120 and nonvolatile memory 1122. The basic input/output system (BIOS), containing the basic routines to transfer information between elements within the computer 1112, such as during start-up, is stored in nonvolatile memory 1122. By way of illustration, and not limitation, nonvolatile memory 1122 can include read only memory (ROM), programmable ROM (PROM), electrically programmable ROM (EPROM), electrically erasable programmable ROM (EEPROM), flash memory, or nonvolatile random access memory (RAM) (e.g., ferroelectric RAM (FeRAM). Volatile memory 1120 includes random access memory (RAM), which acts as external cache memory. By way of illustration and not limitation, RAM is available in many forms such as static RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM.

Computer 1112 also includes removable/non-removable, volatile/nonvolatile computer storage media. FIG. 11 illustrates, for example, a disk storage 1124. Disk storage 1124 includes, but is not limited to, devices like a magnetic disk drive, floppy disk drive, tape drive, Jaz drive, Zip drive, LS-100 drive, flash memory card, or memory stick. The disk storage 1124 also can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 1124 to the system bus 1118, a removable or non-removable interface is typically used, such as interface 1126.

FIG. 11 also depicts software that acts as an intermediary between users and the basic computer resources described in the suitable operating environment 1100. Such software includes, for example, an operating system 1128. Operating system 1128, which can be stored on disk storage 1124, acts to control and allocate resources of the computer system 1112. System applications 1130 take advantage of the management of resources by operating system 1128 through program modules 1132 and program data 1134, e.g., stored either in system memory 1116 or on disk storage 1124. It is to be appreciated that this disclosure can be implemented with various operating systems or combinations of operating systems.

A user enters commands or information into the computer 1112 through input device(s) 1136. Input devices 1136 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1114 through the system bus 1118 via interface port(s) 1138. Interface port(s) 1138 include, for example, a serial port, a parallel port, a game port, and a universal serial bus (USB). Output device(s) 1140 use some of the same type of ports as input device(s) 1136. Thus, for example, a USB port may be used to provide input to computer 1112, and to output information from computer 1112 to an output device 1140. Output adapter 1142 is provided to illustrate that there are some output devices 1140 like monitors, speakers, and printers, among other output devices 1140, which require special adapters. The output adapters 1142 include, by way of illustration and not limitation, video and sound cards that provide a means of connection between the output device 1140 and the system bus 1118. It should be noted that other devices and/or systems of devices provide both input and output capabilities such as remote computer(s) 1144.

Computer 1112 can operate in a networked environment using logical connections to one or more remote computers, such as remote computer(s) 1144. The remote computer(s) 1144 can be a personal computer, a server, a router, a network PC, a workstation, a microprocessor based appliance, a peer device or other common network node and the like, and typically includes many or all of the elements described relative to computer 1112. For purposes of brevity, only a memory storage device 1146 is illustrated with remote computer(s) 1144. Remote computer(s) 1144 is logically connected to computer 1112 through a network interface 1148 and then physically connected via communication connection 1150. Network interface 1148 encompasses wire and/or wireless communication networks such as local-area networks (LAN), wide-area networks (WAN), cellular networks, etc. LAN technologies include Fiber Distributed Data Interface (FDDI), Copper Distributed Data Interface (CDDI), Ethernet, Token Ring and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 1150 refers to the hardware/software employed to connect the network interface 1148 to the bus 1118. While communication connection 1150 is shown for illustrative clarity inside computer 1112, it can also be external to computer 1112. The hardware/software necessary for connection to the network interface 1148 includes, for exemplary purposes only, internal and external technologies such as, modems including regular telephone grade modems, cable modems and DSL modems, ISDN adapters, and Ethernet cards.

FIG. 12 is a schematic block diagram of a sample-computing environment 1200 with which the subject matter of this disclosure can interact. The system 1200 includes one or more client(s) 1210. The client(s) 1210 can be hardware and/or software (e.g., threads, processes, computing devices). The system 1200 also includes one or more server(s) 1230. Thus, system 1200 can correspond to a two-tier client server model or a multi-tier model (e.g., client, middle tier server, data server), amongst other models. The server(s) 1230 can also be hardware and/or software (e.g., threads, processes, computing devices). The servers 1230 can house threads to perform transformations by employing this disclosure, for example. One possible communication between a client 1210 and a server 1230 may be in the form of a data packet transmitted between two or more computer processes.

The system 1200 includes a communication framework 1250 that can be employed to facilitate communications between the client(s) 1210 and the server(s) 1230. The client(s) 1210 are operatively connected to one or more client data store(s) 1220 that can be employed to store information local to the client(s) 1210. Similarly, the server(s) 1230 are operatively connected to one or more server data store(s) 1240 that can be employed to store information local to the servers 1230.

It is to be noted that aspects or features of this disclosure can be exploited in substantially any wireless telecommunication or radio technology, e.g., Wi-Fi; Bluetooth; Worldwide Interoperability for Microwave Access (WiMAX); Enhanced General Packet Radio Service (Enhanced GPRS); Third Generation Partnership Project (3GPP) Long Term Evolution (LTE); Third Generation Partnership Project 2 (3GPP2) Ultra Mobile Broadband (UMB); 3GPP Universal Mobile Telecommunication System (UMTS); High Speed Packet Access (HSPA); High Speed Downlink Packet Access (HSDPA); High Speed Uplink Packet Access (HSUPA); GSM (Global System for Mobile Communications) EDGE (Enhanced Data Rates for GSM Evolution) Radio Access Network (GERAN); UMTS Terrestrial Radio Access Network (UTRAN); LTE Advanced (LTE-A); etc. Additionally, some or all of the aspects described herein can be exploited in legacy telecommunication technologies, e.g., GSM. In addition, mobile as well non-mobile networks (e.g., the Internet, data service network such as internet protocol television (IPTV), etc.) can exploit aspects or features described herein.

While the subject matter has been described above in the general context of computer-executable instructions of a computer program that runs on a computer and/or computers, those skilled in the art will recognize that this disclosure also can or may be implemented in combination with other program modules. Generally, program modules include routines, programs, components, data structures, etc. that perform particular tasks and/or implement particular abstract data types. Moreover, those skilled in the art will appreciate that the inventive methods may be practiced with other computer system configurations, including single-processor or multiprocessor computer systems, mini-computing devices, mainframe computers, as well as personal computers, hand-held computing devices (e.g., PDA, phone), microprocessor-based or programmable consumer or industrial electronics, and the like. The illustrated aspects may also be practiced in distributed computing environments where tasks are performed by remote processing devices that are linked through a communications network. However, some, if not all aspects of this disclosure can be practiced on stand-alone computers. In a distributed computing environment, program modules may be located in both local and remote memory storage devices.

As used in this application, the terms "component," "system," "platform," "interface," and the like, can refer to and/or can include a computer-related entity or an entity related to an operational machine with one or more specific functionalities. The entities disclosed herein can be either hardware, a combination of hardware and software, software, or software in execution. For example, a component may be, but is not limited to being, a process running on a processor, a processor, an object, an executable, a thread of execution, a program, and/or a computer. By way of illustration, both an application running on a server and the server can be a component. One or more components may reside within a process and/or thread of execution and a component may be localized on one computer and/or distributed between two or more computers.

In another example, respective components can execute from various computer readable media having various data structures stored thereon. The components may communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry, which is operated by a software or firmware application executed by a processor. In such a case, the processor can be internal or external to the apparatus and can execute at least a part of the software or firmware application. As yet another example, a component can be an apparatus that provides specific functionality through electronic components without mechanical parts, wherein the electronic components can include a processor or other means to execute software or firmware that confers at least in part the functionality of the electronic components. In an aspect, a component can emulate an electronic component via a virtual machine, e.g., within a cloud computing system.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Moreover, articles "a" and "an" as used in the subject specification and annexed drawings should generally be construed to mean "one or more" unless specified otherwise or clear from context to be directed to a singular form.

As used herein, the terms "example" and/or "exemplary" are utilized to mean serving as an example, instance, or illustration. For the avoidance of doubt, the subject matter disclosed herein is not limited by such examples. In addition, any aspect or design described herein as an "example" and/or "exemplary" is not necessarily to be construed as preferred or advantageous over other aspects or designs, nor is it meant to preclude equivalent exemplary structures and techniques known to those of ordinary skill in the art.

Various aspects or features described herein can be implemented as a method, apparatus, system, or article of manufacture using standard programming or engineering techniques. In addition, various aspects or features disclosed in this disclosure can be realized through program modules that implement at least one or more of the methods disclosed herein, the program modules being stored in a memory and executed by at least a processor. Other combinations of hardware and software or hardware and firmware can enable or implement aspects described herein, including a disclosed method(s). The term "article of manufacture" as used herein can encompass a computer program accessible from any computer-readable device, carrier, or storage media. For example, computer readable storage media can include but are not limited to magnetic storage devices (e.g., hard disk, floppy disk, magnetic strips...), optical discs (e.g., compact disc (CD), digital versatile disc (DVD), blu-ray disc (BD) ...), smart cards, and flash memory devices (e.g., card, stick, key drive...), or the like.

As it is employed in the subject specification, the term "processor" can refer to substantially any computing processing unit or device comprising, but not limited to, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. Further, processors can exploit nano-scale architectures such as, but not limited to, molecular and quantum-dot based transistors, switches and gates, in order to optimize space usage or enhance performance of user equipment. A processor may also be implemented as a combination of computing processing units.

In this disclosure, terms such as "store," "storage," "data store," data storage," "database," and substantially any other information storage component relevant to operation and functionality of a component are utilized to refer to "memory components," entities embodied in a "memory," or components comprising a memory. It is to be appreciated that memory and/or memory components described herein can be either volatile memory or nonvolatile memory, or can include both volatile and nonvolatile memory.

By way of illustration, and not limitation, nonvolatile memory can include read only memory (ROM), programmable ROM (PROM), electrically programmable ROM (EPROM), electrically erasable ROM (EEPROM), flash memory, or nonvolatile random access memory (RAM) (e.g., ferroelectric RAM (FeRAM). Volatile memory can include RAM, which can act as external cache memory, for example. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM (RDRAM). Additionally, the disclosed memory components of systems or methods herein are intended to include, without being limited to including, these and any other suitable types of memory.

It is to be appreciated and understood that components, as described with regard to a particular system or method, can include the same or similar functionality as respective components (e.g., respectively named components or similarly named components) as described with regard to other systems or methods disclosed herein.

What has been described above includes examples of systems and methods that provide advantages of this disclosure. It is, of course, not possible to describe every conceivable combination of components or methods for purposes of describing this disclosure, but one of ordinary skill in the art may recognize that many further combinations and permutations of this disclosure are possible. Furthermore, to the extent that the terms "includes," "has," "possesses," and the like are used in the detailed description, claims, appendices and drawings such terms are intended to be inclusive in a manner similar to the term "comprising" as "comprising" is interpreted when employed as a transitional word in a claim.

Further aspects of the invention are provided by the subject matter of the following clauses:
1. A system, comprising:
   a memory having stored thereon computer executable components;
   a processor that executes at least the following computer executable components:
      a digital twin modeling component that generates a set of digital twin models indicative of a set of virtual representations for a set of physical components associated with an asset;
      a digital twin scoring component that generates a set of digital twin scores for the set of digital twin models; and
      an asset scoring component that determines a digital twin score indicative of a condition state for the asset based on the set of digital twin scores and a fly-forward forecasting model associated with predicted operational characteristics for the asset.
2. The system of any preceding clause, wherein the digital twin modeling component generates a digital twin model indicative of a virtual representation for a failure mode on a physical component from the set of physical components.
3. The system of any preceding clause, wherein the digital twin score for the asset is a maximum acceptable digital twin score for the asset that enables goal data to meet defined criteria associated with use of acceptable serviceable materials.
4. The system of any preceding clause, wherein the digital twin scoring component utilizes configuration data for the set of physical components associated with the asset, and wherein the asset scoring component determines the digital twin score for the asset based on the set of digital twin scores, the fly-forward forecasting model, and the configuration data.
5. The system of any preceding clause, wherein the asset scoring component executes the fly-forward forecasting model based on a set of operational parameters and environmental data associated with the asset.
6. The system of any preceding clause, wherein the computer executable components further comprise:
   a user interface component that provides a graphical user interface via a computing device to determine goal data for the asset.
7. The system of any preceding clause, wherein the computer executable components further comprise:
   an inventory component that determines inventory data for a set of available assets associated with the set of physical components based on the goal data and the digital twin score for the asset, wherein the inventory component transmits the inventory data to a workscoping system that manages the set of available assets.
8. A method, comprising:
   generating, by a system comprising a processor, a set of digital twin models indicative of a set of virtual representations for a set of physical components associated with an asset;
   generating, by the system, a set of digital twin scores for the set of digital twin models; and
   determining, by the system, a digital twin score indicative of a condition state for the asset based on the set of digital twin scores and a fly-forward forecasting model associated with predicted operational characteristics for the asset.
9. The method of any preceding clause, further comprising:
   obtaining, by the system, configuration data for the set of physical components associated with the asset.
10. The method of any preceding clause, wherein the determining the digital twin score comprises determining the digital twin score for the asset based on the set of digital twin scores, the fly-forward forecasting model, and the configuration data.
11. The method of any preceding clause, further comprising:
   executing, by the system, the fly-forward forecasting model based on a set of operational parameters and environmental data associated with the asset.
12. The method of any preceding clause, further comprising:
   presenting, by the system, a graphical user interface on a computing device to determine goal data for the asset.
13. The method of any preceding clause, further comprising:
   determining, by the system, inventory data for a set of available assets associated with the set of physical components based on the goal data and the digital twin score for the asset.
14. The method of any preceding clause, further comprising:
   transmitting, by the system, the inventory data to a workscoping system that manages the set of available assets.
15. A computer readable storage device comprising instructions that, in response to execution, cause a system comprising a processor to perform operations, comprising:
   generating a set of digital twin models indicative of a set of virtual representations for a set of physical components associated with an asset;
   generating a set of digital twin scores for the set of digital twin models; and
   determining a digital twin score indicative of a condition state for the asset based on the set of digital twin scores and a fly-forward forecasting model associated with predicted operational characteristics for the asset.
16. The computer readable storage device of any preceding clause, wherein the operations further comprise:
   utilizing configuration data for the set of physical components associated with the asset.
17. The computer readable storage device of any preceding clause, wherein the determining the digital twin score comprises determining the digital twin score for the asset based on the set of digital twin scores, the fly-forward forecasting model, and the configuration data.
18. The computer readable storage device of any preceding clause, wherein the operations further comprise:
   executing the fly-forward forecasting model based on a set of operational parameters and environmental data associated with the asset.
19. The computer readable storage device of any preceding clause, wherein the operations further comprise:
   presenting a graphical user interface on a computing device to determine goal data for the asset.
20. The computer readable storage device of any preceding clause, wherein the operations further comprise:
   transmitting the inventory data to a workscoping system that manages a set of available assets.

## Claims

1. A system, comprising:
a memory having stored thereon computer executable components;
a processor that executes at least the following computer executable components:
a digital twin modeling component that generates a set of digital twin models indicative of a set of virtual representations for a set of physical components associated with an asset;
a digital twin scoring component that generates a set of digital twin scores for the set of digital twin models; and
an asset scoring component that determines a digital twin score indicative of a condition state for the asset based on the set of digital twin scores and a fly-forward forecasting model associated with predicted operational characteristics for the asset.

2. The system of claim 1, wherein the digital twin modeling component generates a digital twin model indicative of a virtual representation for a failure mode on a physical component from the set of physical components.

3. The system of claim 1 or 2, wherein the digital twin score for the asset is a maximum acceptable digital twin score for the asset that enables goal data to meet defined criteria associated with use of acceptable serviceable materials.

4. The system of any of claims 1 to 3, wherein the digital twin scoring component utilizes configuration data for the set of physical components associated with the asset, and wherein the asset scoring component determines the digital twin score for the asset based on the set of digital twin scores, the fly-forward forecasting model, and the configuration data.

5. The system of any of claims 1 to 4, wherein the asset scoring component executes the fly-forward forecasting model based on a set of operational parameters and environmental data associated with the asset.

6. The system of any of claims 1 to 5, wherein the computer executable components further comprise:
a user interface component that provides a graphical user interface via a computing device to determine goal data for the asset.

7. The system of claim 6, wherein the computer executable components further comprise:
an inventory component that determines inventory data for a set of available assets associated with the set of physical components based on the goal data and the digital twin score for the asset, wherein the inventory component transmits the inventory data to a workscoping system that manages the set of available assets.

8. A method, comprising:
generating, by a system comprising a processor, a set of digital twin models indicative of a set of virtual representations for a set of physical components associated with an asset;
generating, by the system, a set of digital twin scores for the set of digital twin models; and
determining, by the system, a digital twin score indicative of a condition state for the asset based on the set of digital twin scores and a fly-forward forecasting model associated with predicted operational characteristics for the asset.

9. The method of claim 8, further comprising:
obtaining, by the system, configuration data for the set of physical components associated with the asset.

10. The method of claim 9, wherein the determining the digital twin score comprises determining the digital twin score for the asset based on the set of digital twin scores, the fly-forward forecasting model, and the configuration data.

11. The method of any of claims 8 to 10, further comprising:
executing, by the system, the fly-forward forecasting model based on a set of operational parameters and environmental data associated with the asset.

12. The method of any of claims 8 to 11, further comprising:
presenting, by the system, a graphical user interface on a computing device to determine goal data for the asset.

13. The method of claim 12, further comprising:
determining, by the system, inventory data for a set of available assets associated with the set of physical components based on the goal data and the digital twin score for the asset.

14. The method of claim 13, further comprising:
transmitting, by the system, the inventory data to a workscoping system that manages the set of available assets.

15. A computer readable storage device comprising instructions that, in response to execution, cause a system comprising a processor to perform operations, comprising:
generating a set of digital twin models indicative of a set of virtual representations for a set of physical components associated with an asset;
generating a set of digital twin scores for the set of digital twin models; and
determining a digital twin score indicative of a condition state for the asset based on the set of digital twin scores and a fly-forward forecasting model associated with predicted operational characteristics for the asset.
